# EUROPÄISCHE PATENTANMELDUNG

(11) **EP 1 429 110 A1**
(43) Veröffentlichungstag der Anmeldung: **16.06.2004**
(21) Anmeldenummer: 03027906.1
(22) Anmeldetag: 04.12.2003
(51) Int. Cl.: G01B 5/20, G01B 7/28

(54) **Messsystem zur Bestimmung der Messunsicherheit von Messmaschinen beim Vergleich von Zahnrädern mit Verzahnungsnormalen**

(30) Priorität: 11.12.2002 DE 10257702
(71) Anmelder: Frenco Verzahnungstechnik. Messtechnik GmbH, 90518 Altdorf (DE)
(72) Erfinder: Och, Rudolf, 90475 Nürnberg (DE)
(74) Vertreter: Brose, Manfred, Dr.

(57) **Zusammenfassung**

Ein Meßsystem zur Bestimmung der Meßunsicherheit von Meßmaschinen beim Vergleich der Außen- oder Innenverzahnung von Zahnrädern mit Verzahnungsnormalen, besteht aus einem ersten Verzahnungsnormal für Schrägverzahnungen mit schrägverzahnten Zahnlücken. Mit diesem Verzahnungsnormal lassen sich die Meßunsicherheiten der Profil- und Flankenlinienabweichungen sowie des Kugelmaßes bei Außenund Innenverzahnungen bei geraden und ungeraden Zähnezahlen ermitteln. Ein zweites Verzahnungsnormal mit geraden, umfangsmäßig voll ausgeführten Zähnen dient zur Bestimmung der Meßunsicherheiten von Profil- und Flankenlinienabweichungen und des Kugelmaßes von Geradverzahnungen sowie der Einzelteilungs-, Gesamtteilungs- und Rundlaufabweichungen von Gerad- und Schrägverzahnungen.

## Beschreibung

Die Erfindung betrifft ein Meßsystem zur Bestimmung der Meßunsicherheit von Meßmaschinen beim Vergleich der Außen- oder Innenverzahnung von Zahnrädern mit Verzahnungsnormalen.

Normale für die Bestimmung der Meßunsicherheit von Meßmaschinen werden bereits vielfältig eingesetzt, Bei dsren Verwendung wird jedoch bisher kein Wert auf die Ähnlichkeit der Normale mit dem zu prüfenden Werkstück gelegt. Sind die Verzahnungen von Normal und Werkstück jedoch ähnlich, dann läßt sich die Meßunsicherheit wesentlich genauer und einfacher ermitteln. Gleichzeitig ist es notwendig, alle Prüfmerkmale bei allen vorhandenen Verzahnungsarten mit möglichst wenigen Normalen erfassen zu können.

Für Verzahnungen können fünf Qualitätsmerkmale angegeben werden, nämlich : Profil, Flankenlinie, Kugelmaß, Teilung und Rundlauf. Von diesen fünf Qualitätsmerkmalen sind in der Praxis bisher nur die beiden ersten Merkmale : Profil und Flankenlinie bei der Ermittlung der Qualität gemessen und angegeben worden. Es besteht jedoch die Notwendigkeit, auch die drei weiteren Qualitätsmerkmale : Kugelmaß, Teilung und Rundlauf zu bestimmen.

Der Erfindung liegt daher die Aufgabe zugrunde, Normale in einer möglichst kleinen Anzahl zu schaffen, mit denen sämtliche fünf Qualitätsmerkmale einer Verzahnung bestimmt werden können.

Zur Lösung dieser Aufgabe geht die Erfindung für Schrägverzahnungen von einem ersten Verzahnungsnormal mit schrägverzahnten Zahnlücken für die Bestimmung der Meßunsicherheiten der Profil- und Flankenlinienabweichungen aus. Die Erfindung besteht darin, daß das Normal auch nach dem Kennzeichen von Anspruch 1 ausgelegt ist.

In den Unteransprüchen werden Fortbildungen der Erfindung beansprucht.

In den Zeichnungen sind Ausführungsbeispiele der Erfindung wiedergegeben. Rs zeigen :
- Fig. 1A: ein Normal A1 für die Bestimmung der Meßunsicherheiten von Außenverzahnungen mit gerader und ungerader Zähnezahl aus Richtung des Pfeiles IA von Figur IB,
- Fig. 1B: eine Ansicht des Normals A1 aus Richtung des Pfeils IB von Figur IA,
- Fig. 1C: eine perspektische Ansicht des Normals Al
- Fig. 2A: ein Normal B1 für die Bestimmung der Meßunsicherheiten von Außengeradverzahnungen aus Richtung des Pfeiles IIA von Figur 2B
- Fig. 2B: eine Ansicht des Normals B1 aus Richtung des Pfeils IIB von Figur 2A,
- Fig. 2C: eine perspektivische Ansicht des Normals B1,
- Fig. 3A: ein Normal A2 für die Bestimmung der Meßunsicherheiten von Innenschrägverzahnungen mit gerader oder ungerader Zähnezahl aus Richtung des Pfeils IIIA von Figur 3B,
- Fig. 3B: eine Ansicht des Normals A2 aus Richtung des Pfeils IIIB von Figur 3A,
- Fig. 4A: das Normal B2 für die Bestimmung der Meßunsicherheiten von Innengeradverzahnungen im Schnitt nach der Linie IVA - IVA von Figur 4B und
- Fig. 4B: eine Ansicht des Normals B2 aus Richtung des Pfeils IVB von Figur 4A.

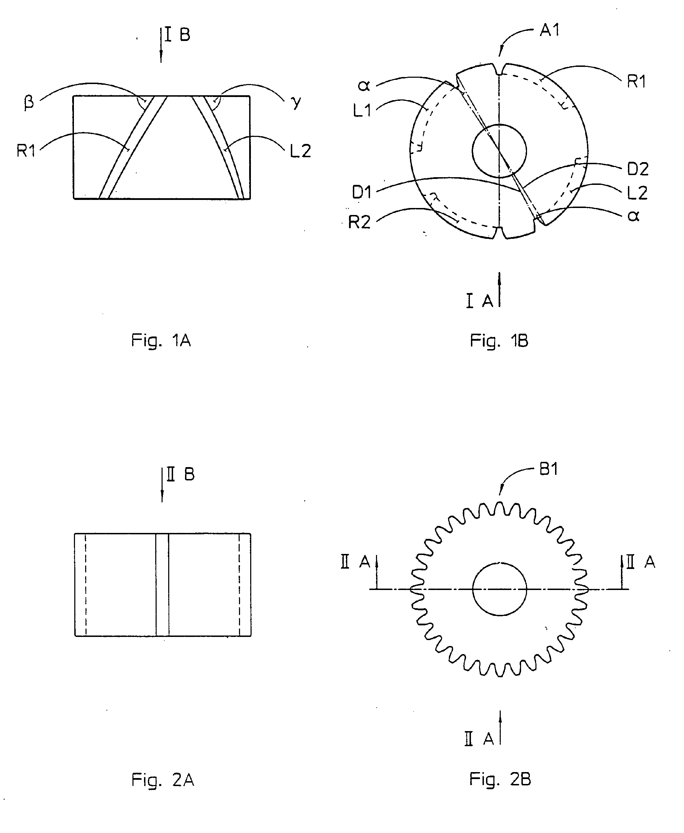

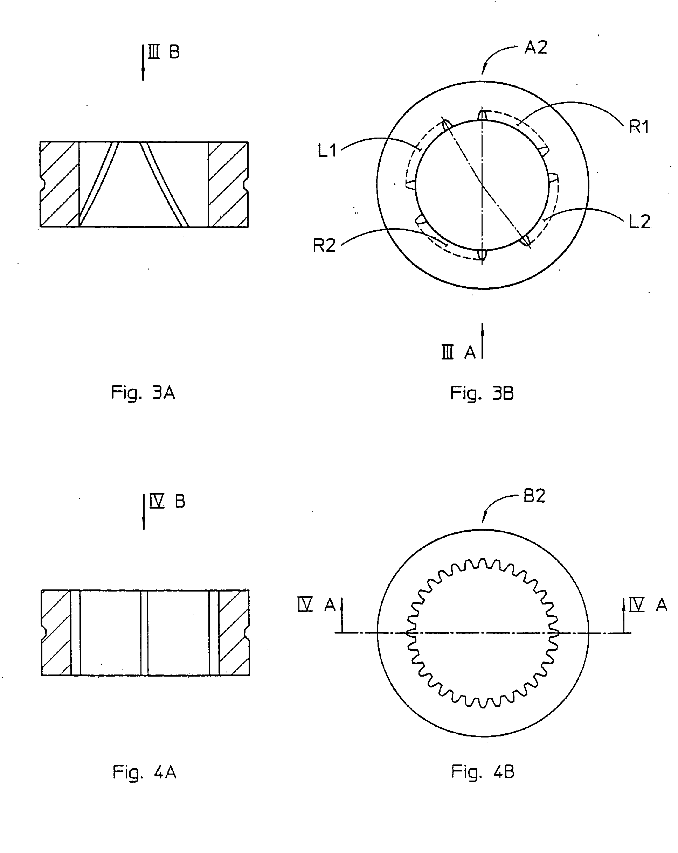

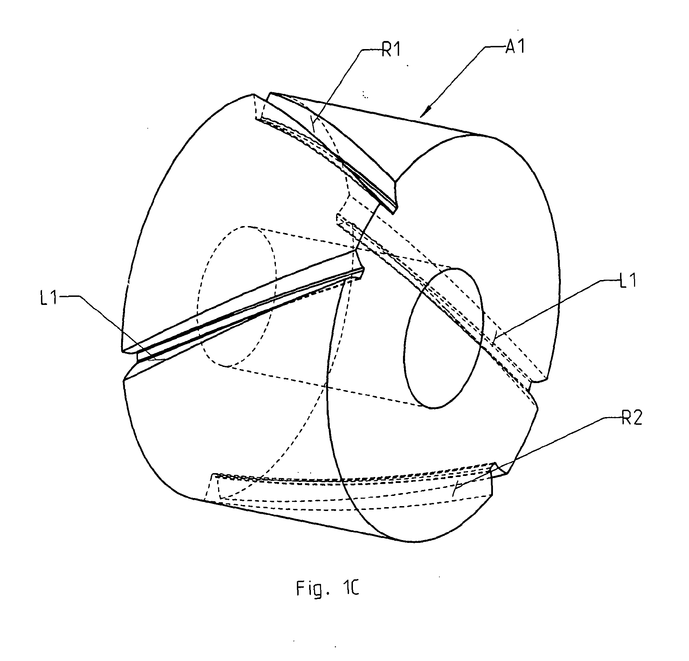

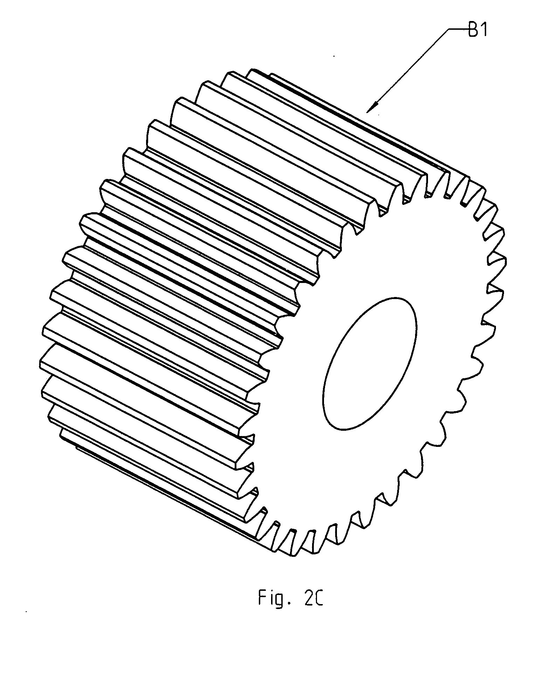

Mit dem in den Figuren 1A, 1B und 1C dargestellten Normal A1 kann neben der Ermittlung der Meßunsicherheiten der Profil- und Flankenlinienabweichungen, nach der Erfindung auch die Meßunsicherheit des Kugelmaßes eines in den Zeichnungen nicht dargestellten Zahnrades mit einer Außenverzahnung und mit gerader oder ungerader Zähnezahl bestimmt werden. Handelt es sich jedoch um ein Zahnrad mit Innenverzahnung, dann ist der Meßvergleich mit einem Normal A2 nach den Figuren 3A, 3B durchzuführen.

Hat das Zahnrad eine gerade Zähnezahl, dann erfolgt der Vergleich mit den Zahnlücken R1, R2. Die beiden Zahnlücken R1, R2 liegen exakt auf einem Durchmesser der Normale A1, A2 einander gegenüber.

Hat das Zahnrad jedoch eine ungerade Zähnezahl, dann erfolgt der Vergleich mit den Zahnlücken L1, L2. In diesem Fall sind die durch die beiden Zahnlücken L1, L2 verlaufenden Durchmesser D1, D2 um einen Winkel α gegeneinander verdreht. Der Winkel α ist gleich der halben Teilung des Zahnkranzes.

Es sind nun die beiden Möglichkeiten vorhanden, daß der erste Schrägungswinkel β ein rechtssteigender Schrägungswinkel und der zweite Schrägungswinkel γ ein linkssteigender Schrägungswinkel ist. Andererseits ist es aber auch umgekehrt möglich, daß der erste Schrägungswinkel β ein linkssteigender und der zweite Schrägungswinkel γ ein rechtssteigender Schrägungswinkel ist.

Weiter ist ein zweites Normal mit Außenverzahnung und mit umfangsmäßig voll ausgeführten Zähnen vorhanden. In den Figuren 4A, 4B ist wieder das entsprechende Normal B2 mit Innenverzahnung zur Vermessung eines Zahnrades mit Innenverzahnung dargestellt. Mit derartigen Normalen B1, B2 hat man bisher nur die Profil- und Flankenlinienabweichungen von Geradverzahnungen ermittelt. Die Normale B1, B2 dienen nach der Erfindung auch dazu, die Meßunsicherheiten des kugelmaßes von Geradverzahnungen sowie der Einzelteilungs-, Gesamtteilungs- und Rundlaufabweichungen von Gerad- und Schrägverzahnungen zu ermitteln.

## Patentansprüche

1. Meßsystem zur Bestimmung der Meßunsicherheit von Meßmaschinen beim Vergleich der Außen- oder Innenverzahnung von Zahnrädern mit Verzahnungsnormalen, bestehend aus einem ersten Verzahnungsnormal (A) für Schrägverzahnungen mit schrägverzahnten Zahnlücken für die Bestimmung der Meßunsicherheiten der Profil- und Flankenlinienabweichung der Schrägverzahnungen,
**dadurch gekennzeichnet, daß**
das Verzahnungsnormal zur Bestimmung der Meßunsicherheit des Kugelmaßes bei Außenverzahnungen (A1) über oder bei Innenverzahnungen (A2) zwischen zwei Meßkugeln von Schrägverzahnungen mit geraden oder ungeraden Zähnezahlen für gerade Zähnezahlen zwei auf einem Durchmesser gegenüberliegende erste Zahnlücken (R1, R2) mit einem ersten Schrägungswinkel ( β ) und für ungerade Zähnezahlen zwei zweite Zahnlücken (L1, L2) mit einem zweiten Schrägungswinkel ( γ ) aufweist, wobei die durch die zweiten Zahnlücken (L1, L2) verlaufenden Durchmesser (D1, D2) einen Winkel (α ) in Größe der halben Teilung der ungeraden Zähnezahl bilden.

2. Meßsystem nach Anspruch 1,
**dadurch gekennzeichnet, daß**
der erste Schrägungswinkel ( β ) ein rechtssteigender Schrägungswinkel und der zweite Schrägungswinkel ( γ ) ein linkssteigender Schrägungswinkel ist.

3. Meßsystem nach Anspruch 1,
**dadurch gekennzeichnet, daß**
der erste Schrägungswinkel ( β ) ein linkssteigender Schrägungswinkel und der zweite Schrägungswinkel ( γ ) ein rechtssteigender Schrägungswinkel ist.

4. Meßsystem nach einem der Ansprüche 1 bis 3, bestehend aus einem zweiten Verzahnungsnormal (B1) mit geraden, umfangsmäßig voll ausgeführten Zähnen für die Bestimmung der Meßunsicherheiten der Profil- und Flnkenlinienabweichungen von Geradverzahnungen, **gekennzeichnet durch**
das zweite Verzahnungsnormal (B1, B2) zur weiteren Bestimmung der Meßunsicherheit des Kugelmaßes von Geradverzahnungen sowie der Einzelteilungs-, Gesamtteilungs- und Rundlaufabweichungen von Gerad- und Schrägverzahnungen.
